# EUROPEAN PATENT SPECIFICATION

(11) **EP 4 279 213 B1**
(45) Date of publication and mention of the grant of the patent: **16.04.2025**
(21) Application number: 23174138.0
(22) Date of filing: 18.05.2023
(51) Int. Cl.: B23Q 39/04, B23Q 5/02, B23Q 39/00

(54) **MACHINE TOOL FOR MACHINING WITH A PLURALITY OF MACHINING STATION**
SPANABHEBENDE WERKZEUGMASCHINE MIT MEHREREN BEARBEITUNGSSTATIONEN
MACHINE OUTIL D'USINAGE AVEC UNE PLURALITE DE STATIONS D'USINAGE

(30) Priority: 19.05.2022 IT 202200010379
(43) Date of publication of application: 22.11.2023
(73) Proprietor: Gnutti Transfer S.p.A., 25035 Ospitaletto (Brescia) (IT)
(72) Inventor: Gnutti, Renato, 25035 Ospitaletto (BS) (IT); Ettori, Ignazio, 25035 Ospitaletto (BS) (IT)
(74) Representative: Perani & Partners S.p.A.

(56) References cited:
- WO-A1-2017/182839
- DE-U1- 202018 100 761

## Description

### Technical Field

The present invention relates to a machine tool for machining, for example for chip removal, comprising a plurality of machining stations.

### State of the art

Machine tools with automatic transfer of the workpiece, also called "transfer machines", are known in the state of the art. Such transfer machines are configured to combine, in a single production unit, the functions of a series of separate machine tools. In detail, transfer machines comprise a series of workstations in which a workpiece is sequentially transferred to carry out a specific production cycle.

The known transfer machines allow obtaining high production rates and are configured to produce a single product, or at most a family of products. Consequently, the purchase of transfer machines is only justified by high production volumes.

The importance of maximizing the production capacity of transfer machines is therefore evident, for example by reducing the passive steps as much as possible, i.e., those in which the machining does not occur.

Italian patent application No. 102020000018295 describes a transfer machine comprising a plurality of machining stations, a rotating table configured to bring a plurality of workpieces in succession to the machining stations, and actuator members configured to rotate the workpieces about a rotation axis thereof.

In detail, a plurality of gripping members are arranged on the table comprising gripping jaws configured to lock a workpiece in a position facing a machining station.

The actuator members, arranged in the machining stations, are movable from and toward the table to connect with the gripping members and control the rotation of the jaws.

It should be noted that, before being able to perform rotating machining on a workpiece to be machined, it is necessary to wait for the actuator members to approach the table, engage the jaws, and accelerate the latter up to the angular speed of the regime envisaged for the machining.

Similarly, at the end of the machining, before taking the workpieces to be machined to the subsequent machining stations, it is necessary to wait for the angular speed of the jaws to be zero and for the actuator members to move away from the table so as to be disengaged from the jaws.

It should be noted that the production capacity of the machine tool is significantly reduced by the passive processing steps in which the actuator members are moved from and toward the table. In particular, it should be noted that the movement of the actuator members from and toward the table causes an increase in the duration of the passive steps both before and after the machining.

WO 2017/182839 A1 discloses a machine tool according to the preamble of claim 1.

### Object of the invention

In this context, the technical task underlying the present invention is to propose a machine tool for machining which overcomes the drawbacks of the prior art mentioned above.

In particular, it is an object of the present invention to provide a machine tool capable of maximising the production capacity, reducing the duration of the passive machining steps.

In other words, the object of the present invention is to provide a machine tool capable of making the cycle time tend to the actual time required to perform machining operations, i.e. to make the cycle time tend to the duration of the active step.

### SUMMARY OF THE INVENTION

The present invention relates to a machine tool comprising a plurality of machining stations configured to simultaneously perform a plurality of machining on a plurality of workpieces. Examples of machining are for example chip removal operations performed by cutting tools such as cutters, drill bits, boring tools and the like.

The machine tool of the present invention further comprises a workpiece-supporting unit configured to position the workpieces sequentially at the machining stations. Such a workpiece-supporting unit has a plurality of gripping regions which can be sequentially associated with the machining stations. In detail, when operated, the workpiece-supporting unit is configured to sequentially associate the plurality of gripping regions to the machining stations.

Each gripping region has a workpiece gripping member arranged, comprising jaws rotatably operable about a rotation axis thereof. Furthermore, each gripping member comprises first rotatable engaging members which are kinematically connected in rotation to the plurality of jaws to control the rotation of the respective jaws about the rotation axis thereof.

The machine tool further comprises a plurality of actuator members adapted to actuate the rotation of the jaws about the respective rotation axes by acting on the first engaging members. In detail, each actuator member comprises second engaging members which are rotatable and movable from\toward the respective first engaging members to act on the latter.

Furthermore, the machine tool comprises a guide for the first engaging members extending between the machining stations. It should be specified that the first engaging members are configured to slide on the operating guide of the workpiece-supporting unit.

In detail, the guide has a plurality of gaps adapted to be positioned at the gripping regions of the support unit.

Each second engaging member is arranged, at least partially, in a gap of the guide so as to be engaged with a respective first engaging member when the gripping regions are positioned at the machining stations.

It should be noted that, following the operation of the support unit, the first engaging members are brought at the machining stations and engage with the respective second engaging members of the actuator means. Therefore, the machine object of the present invention, by means of the guide and the second engaging members arranged partially in the gaps of the guide, allows to rotatably couple the jaws and the actuator members as soon as the gripping regions are at the machining stations.

It is therefore evident that the machine tool object of the present invention allows the jaws to be operated as soon as the gripping regions are located at the machining stations, thus reducing the duration of the passive steps before and after the machining to the time necessary to accelerate and brake the jaws.

### LIST OF FIGURES

Further features and advantages of the present invention will become more apparent from the description of an exemplary, but not exclusive, and therefore nonlimiting preferred embodiment of a machine tool for machining, as illustrated in the appended figures, in which:
- Figure 1 shows a perspective view of a machine tool according to the present invention;
- Figure 2 shows a perspective view of some components of the machine tool of Figure 1;
- Figure 3 shows a perspective view of some components of the machine of Figure 1;
- Figure 4 shows a detailed view of some components of the machine tool of Figure 3;
- Figure 5 shows a perspective view of some components of the machine of Figure 1;
- Figure 6 shows a relative arrangement of some components of the machine tool of Figure 1;
- Figures 7a and 7b show a first embodiment of some components of the machine tool of Figure 1;
- Figure 8a shows a side view of the components of Figures 7a and 7b in a pre-engaging configuration;
- Figure 8b shows a side view of the components of Figures 7a and 7b in a locking configuration;
- Figure 9 shows a relative arrangement of some components of the machine tool of Figure 1;
- Figures 10a and 10b show a second embodiment of some components of the machine tool of Figure 1;
- Figure 11 shows a side view of the components of Figures 10a and 10b in the locking configuration;
- Figure 12a shows a perspective view of a third embodiment of a component of the machine tool of Figure 1;
- Figure 12b shows a perspective view of a fourth embodiment of a component of the machine tool of Figure 1.

### DETAILED DESCRIPTION

With reference to the appended figures, the present invention relates to a machine tool 1 adapted to perform machining, in particular for chip removal.
In alternative embodiments, it is not excluded that the machine object of the present invention can also be used to perform other mechanical operations, such as assembly operations of one or more components.

The machine tool 1 comprises a plurality of machining stations 2 in which several machining operations are performed simultaneously on different workpieces. In detail, a workpiece is sequentially transferred to the machining stations and is subjected to a specific production cycle which transforms it into a given finished or semi-finished piece.

Each machining station 2 comprises special machining devices configured to interact with the workpiece to perform one or more mechanical processes. It should be specified that machining device means any tool adapted to perform mechanical operations for chip removal. Typically, but not necessarily, such machining devices comprise an insert with a cutting portion which, acting on the surface of the workpiece, removes material therefrom. By way of example, the machining devices can be cutters, boring tools, drill bits, or turning tools.

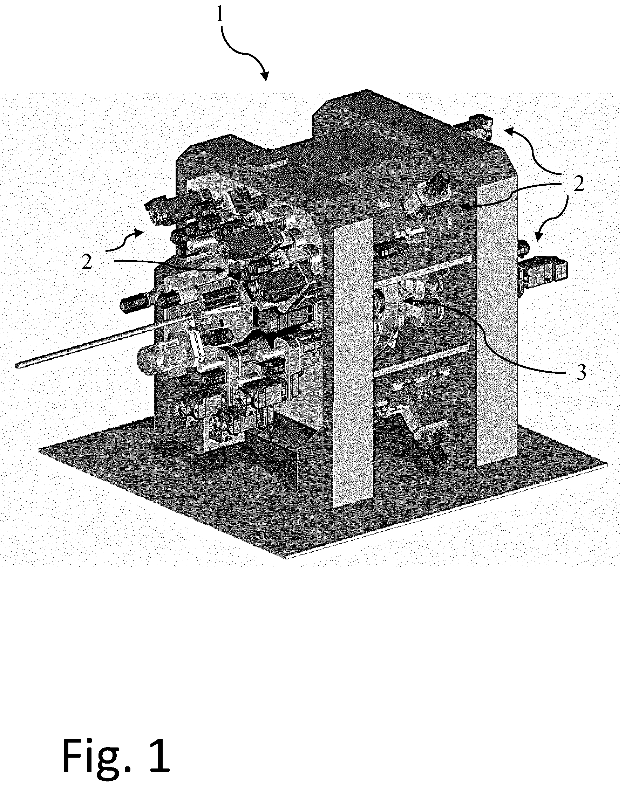

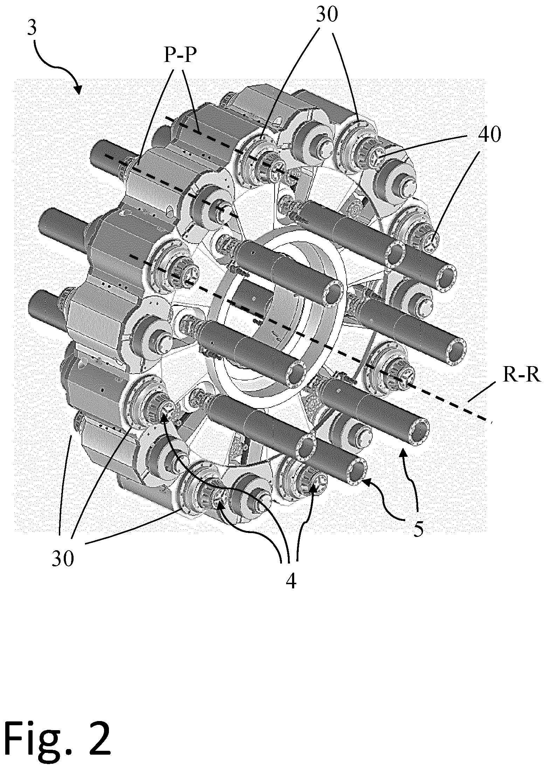

As shown in figures 1 and 2, the machine tool 1 comprises a workpiece-supporting unit 3 adapted to arrange workpieces in the machining stations 2 where they are subjected to predetermined machining. It should be noted that the machining performed in each machining station 2 has comparable durations, so that they can be synchronized.

The workpiece-supporting unit 3 has a plurality of workpiece gripping regions 30 which can be sequentially associated with the machining stations 2. In detail, when actuated, the workpiece-supporting unit 3 is configured to sequentially associate the plurality of gripping regions 30 to the machining stations 2.

In the embodiments shown in the appended figures, preferably, the workpiece-supporting unit 3 is configured to rotate about a main rotation axis R-R. Furthermore, preferably, the gripping regions 30 are arranged so as to be spaced apart from the main rotation axis R-R of the workpiece-supporting unit 3. In use, the gripping regions 30 are sequentially associable to the machining stations 2 upon rotation of the workpiece-supporting unit 3 about the main rotation axis R-R. In other words, the workpiece-supporting unit 3, when operated in rotation, is configured to sequentially bring the gripping regions 30 to the machining stations.

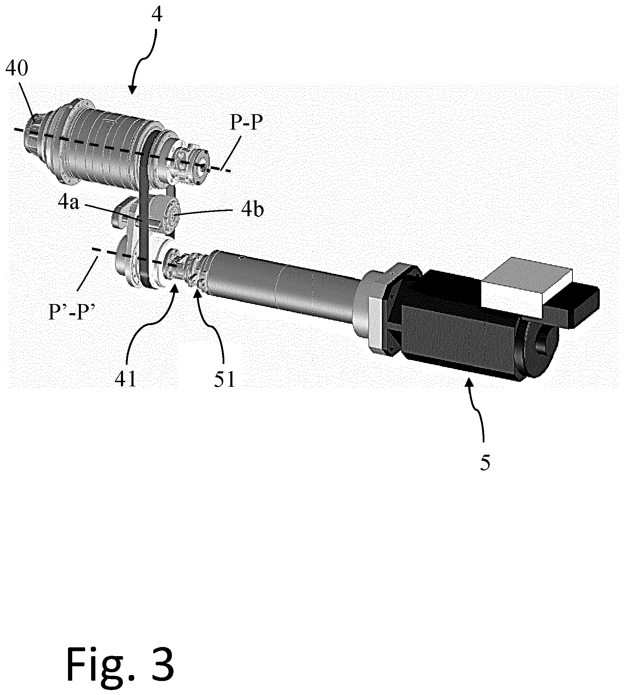

With reference to figure 3, preferably, the gripping regions 30 are spaced apart along a circumferential direction C-C from the main rotation axis R-R. Still more preferably, the gripping regions 30 are equidistant from each other along the circumferential direction C-C and are located at an equal distance from the main rotation axis R-R along a radial direction.

Furthermore, as shown in figure 1, preferably also the machining stations 2 are arranged along the circumferential direction C-C, so that the gripping regions 30 are all available simultaneously in respective machining stations 2.

In alternative embodiments not shown in the appended figures, the machine tool 1 could have a linear configuration. In such a case, the machining stations are arranged in succession along a movement direction and the workpiece-supporting unit is configured to move the workpiece gripping regions along such a movement direction.

The machine tool 1 further comprises gripping members 4 arranged in the gripping regions 30. In detail, each gripping member 4 is arranged in a respective gripping region 30.

Each gripping member 4 comprises gripping jaws 40, which are rotatably operable about a jaw rotation axis P-P, preferably oriented parallel to the main rotation axis R-R. The gripping jaws 40 are configured to grip a respective workpiece and rotate it about the gripping rotation axis P-P. Within the scope of the present invention, gripping jaws 40 are intended as mechanical members capable of switching between a closed configuration adapted to clamp a workpiece, and an open configuration in which the workpiece is insertable/disengageable. Preferably, the plurality of gripping jaws 40 are of the self-centering type.

It should be specified that the jaws 40 are configured to arrange the workpieces cantilevered from the workpiece-supporting unit 3, so that they can be reached and machined by the machining devices.

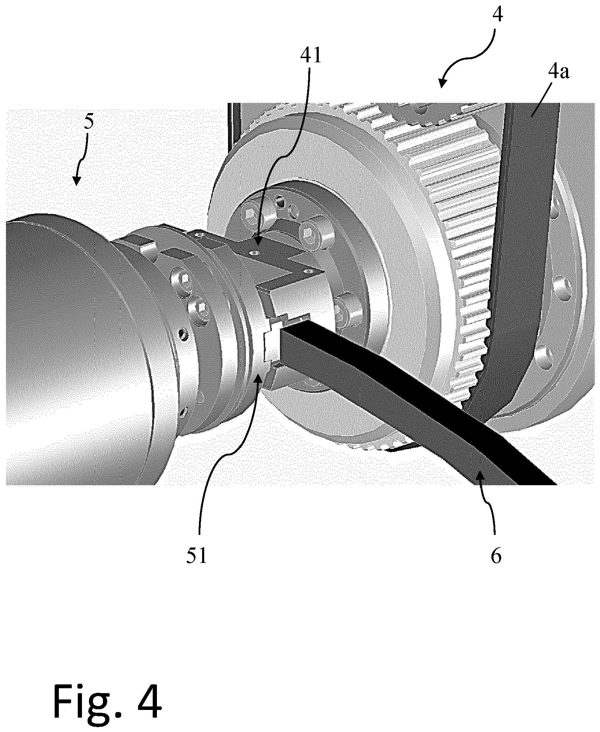

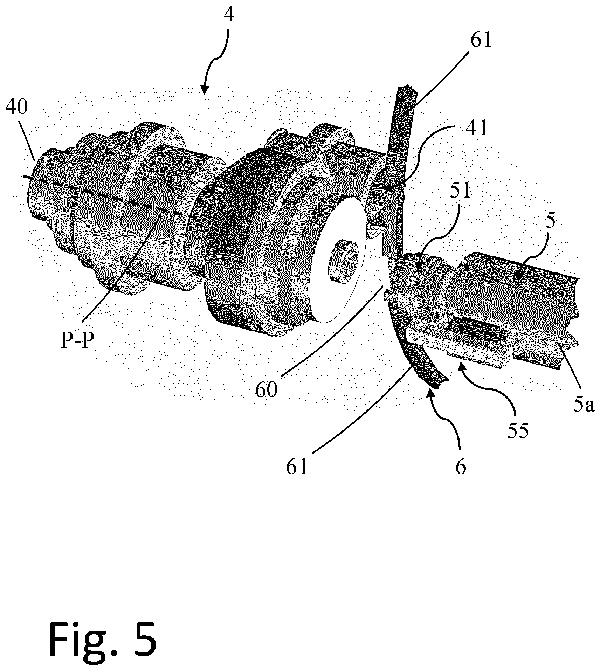

As shown in figures 4 and 5, each gripping member 4 comprises first engaging members 41 kinematically connected in rotation to respective jaws 40. The first engaging members 41 are rotatable about a rotation axis P'-P', preferably distinct from the jaw rotation axis P-P with which they are associated. Even more preferably, the rotation axis P'-P' of the first engaging members 41 is oriented parallel to the jaw rotation axis P-P with which they are associated. In the embodiments of figures 4 and 5, the rotation of the jaws 40 is constrained to that of the first engaging members 41 by means of a belt 4a which is tensionable by means of a special preloading element 4b (belt tensioner). However, other transmission members known in the state of the art such as, for example, an array of gears can be employed to transmit the rotary motion between the jaws 40 and the respective engaging members 41.

More details on the first engaging members 41, in particular on their geometric conformation, will be provided in the following disclosure.

With reference to figures 3-5, the machine tool 1 further comprises actuator members 5 adapted to operate the rotation of the jaws 40 about the respective jaw rotation axes P-P by acting on the first engaging members 41. Each actuator member 5 comprises second engaging members 51 rotatable and engageable in rotation with the first engaging members 41. Preferably, the second engaging members 51 are configured to be rotated about the same rotation axis P'-P' as the respective first engaging members 41.

Preferably, the actuator members 5 comprise an electric motor 5a configured to operate the rotation of the second engaging members 51.

The second engaging members 51 are movable from\toward the respective first engaging members 41 of the gripping members 4 to act on such first engaging members 41. With reference to figure 5, preferably, each actuator member 5 comprises sliding means 55 configured to move the second engaging members 51 from\toward the first engaging members 41. Preferably, the sliding members 55 are hydraulically, pneumatically or electronically operated.

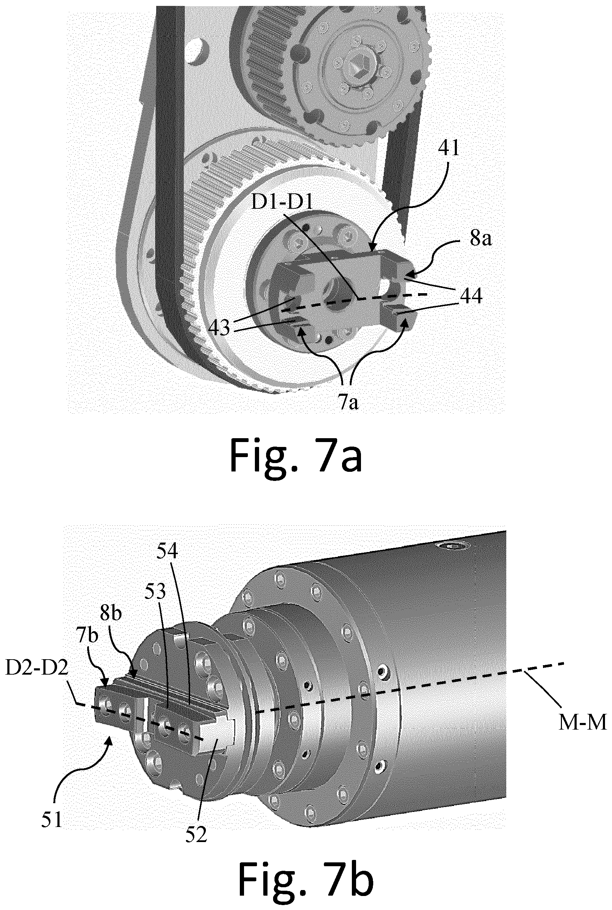

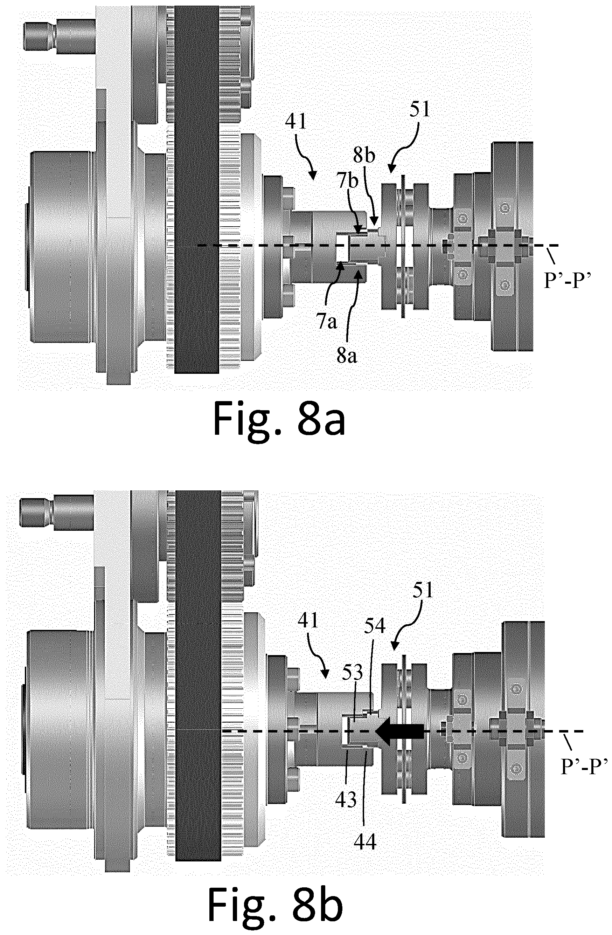

In detail, the second engaging members 51 moving from and toward the respective first engaging members 41 switch between a pre-engaging and a locking configuration, respectively shown in figures 8a, 8b. In detail, the second engaging members 51 are movable from and toward the respective first engaging members 41 along an approaching/distancing direction M-M shown in figure 7b.

In the pre-engaging configuration the first and the second gripping members 41, 52 are connected in rotation with clearance, while in the locking configuration the first and the second gripping members 41, 52 are connected in rotation without clearance. Therefore, in the pre-engaging configuration the first and the second gripping members 41, 52, although coupled, can make minimum relative angular movements, otherwise in the locking configuration the first and the second gripping members 41, 52 are firmly constrained in rotation to each other. Further details on forming the coupling between the first and the second gripping members 41, 52 will be given in the following description.

The machine tool 1 object of the present invention further comprises a guide 6 for the first engaging members 41. In detail, such a guide 6 extends between the machining stations 2.

In the embodiments shown in the appended figures, preferably, such a guide 6 extends about the main rotation axis R-R between the machining stations 2. In other words, preferably, the guide 6 extends along the circumferential direction C-C between the machining stations 2.

In the aforementioned alternative embodiments in which the machine tool 1 has a linear shape, the guide extends along the movement direction between the machining stations. It should be specified that the movement direction can be both linear and serpentine.

In the following, reference will be made exclusively to the embodiments shown in the appended figures. However, what will be said in relation to the embodiments shown in the appended figures also applies to machine tools with linear conformation simply considering the movement direction as circumferential.

With reference to figure 5, the first engaging members 41 are configured to slide on the guide 6 upon the operation of the workpiece-supporting unit 3. Therefore, the guide 6 is shaped to lead the first engaging members 41 in the movement of the gripping regions 30 of the workpiece-supporting unit 3 between the machining stations 2.

With reference to figures 5, 6 and 9, the guide 6 has a plurality of gaps 60 adapted to be positioned at the gripping regions 30, when the latter are associated with the machining stations 2. It should be specified that the gaps 60 are arranged at the machining stations 2.

Preferably, gaps 60 is intended as discontinuities along the circumferential extension direction C-C of the guide 6.

Preferably, in the embodiments shown in figures 5, 6 and 9, the guide 6 comprises a plurality of guide portions 61, each extending along the circumferential direction between two adjacent machining stations 2. Adjacent stations are to be understood as adjacent machining stations along the circumferential direction C-C which the workpiece crosses in sequence. In other words, preferably, the guide portions 61 extend in succession along the circumferential direction C-C and are interspersed with the gaps 60.

In detail, preferably, each guide portion 61 has a pair of opposite ends 62, and each gap 60 is delimited along the circumferential direction by ends 62 of adjacent guide portions 61. Therefore, the gaps 60 are similar to circumferential openings in the guide 6 which divide it into a plurality of guide portions 61.

As shown in figure 5, each second engaging member 51 is arranged, at least partially, in a respective gap 60 of the guide 6. It is therefore evident that the gaps are specially dimensioned to accommodate therein at least part of respective second engaging members 51 in both the pre-engaging and in the locking configuration.
Preferably, the second engaging members 51 being configured to complete the guide 6 at the gaps 60 so as to describe a closed path on which the first engaging members 41 can slide.

Each second engaging member 51 is engaged with the respective first engaging member 41 when the gripping regions 30 are associated with the machining stations 2. In other words, when the workpiece-supporting unit 3, following a rotation, arranges the gripping regions 30 in subsequent machining stations 2, the first and the second engaging means 41, 51 are engaged. More precisely, they are located in the aforementioned pre-engaging configuration.

Therefore, as soon as the first engaging means 41 arrive at a machining station 2, they are already engaged with the second engaging means 51 and it is therefore immediately possible to operate them to rotate the jaws 40.

It is therefore evident that, advantageously, it is possible to bring the jaws 40 to the regime rotation speed while the second engaging means 51 approach the first engaging means 41. Similarly, it is possible to brake the rotation of the jaws 40, following machining, while the second engaging means 51 move away from the first engaging means 41. This makes it possible to significantly reduce the passive times before and after machining, stretching the cycle time as much as possible to the actual machining time.

It should be clarified that finishing machining can also be performed in the pre-engaging configuration, even though this is not specifically intended for machining. In fact, in such a configuration the first and the second engaging means 41, 51 are connected with clearance and this would create rotational vibrations which would significantly compromise the quality of the machining. Otherwise, the finishing machining can be performed in the locking configuration, where the first and the second engaging means 41, 51 are firmly constrained in rotation (no clearance). However, it should be noted that, in order to reduce cycle times, it is possible to perform/start certain machining, such as roughing, already in the pre-engaging configuration.

It should also be specified that the guide 6 is configured to change the orientation of the first engaging members 41 which slide thereon, so as to orient them correctly to allow the coupling with the respective second engaging members 51 at the machining stations 2. Orientation is intended as the angular position of the first engaging members 41 about the respective rotation axis P'-P'.

As shown in figure 5, preferably, each second engaging member 51 is configured to continuously connect two distinct guide portions 61 along the circumferential direction C-C. By doing so, following the rotation of the workpiece-supporting unit 3, the first engaging members 41 oriented by the guide 6 are arranged in the gaps 60, coupling with the respective second engaging members 51.

It should be specified that continuously connecting means that the second engaging members 51, in particular during the transfer of the workpieces from one machining station to the next, extend within the gaps 60 along the circumferential direction C-C, connecting two adjacent guide portions 61. More in detail, the second engaging members 51 are configured to continuously connect the ends 62 of adjacent guide portions 61 along the circumferential direction C-C.

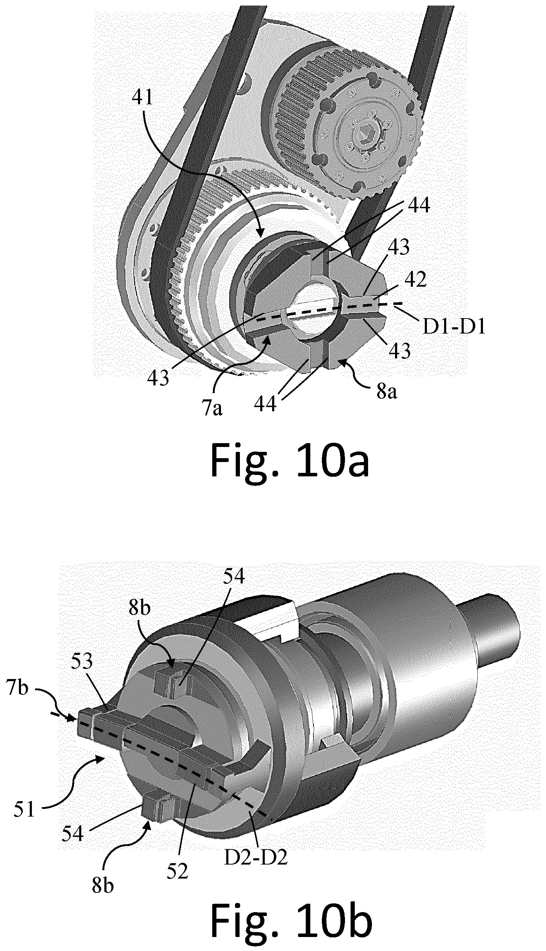

In the embodiments of figures 7b and 10b, preferably, each second engaging member 51 comprises an engaging portion 52 projecting into a respective gap 60 and adapted to continuously connect two guide portions 61 along the circumferential direction C-C according to the above. Furthermore, the engaging portion 52 is rotatably couplable with clearance with the first engaging member 41. In detail, the engaging portion 52 is configured to form a coupling with clearance between the first and the second engaging member 41, 51, when the second engaging member 51 is located in the pre-engaging configuration.

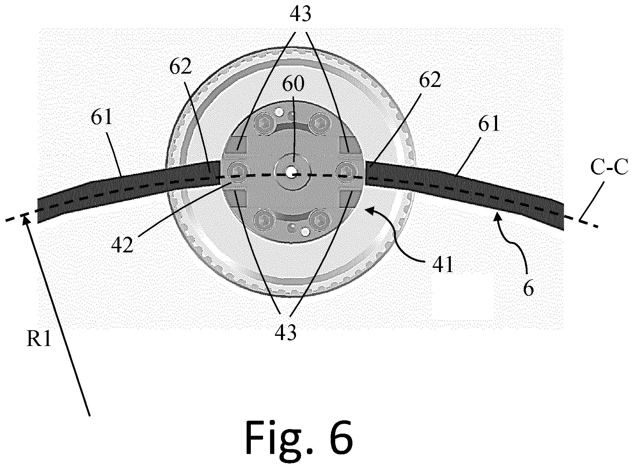

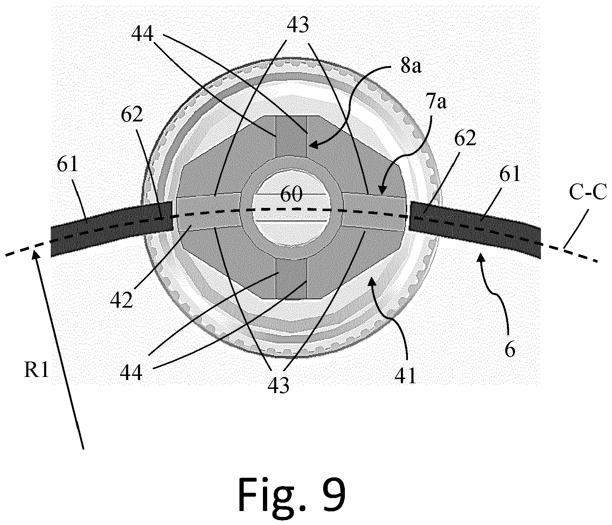

As indicated in figures 6 and 9, preferably, each guide portion 61 extends along the circumferential direction C-C with a first radius of curvature R1, and the engaging portions 52 extend along the circumferential direction C-C with a second radius of curvature R2. Preferably, the first and the second radius of curvature R1, R2 are the same, so that when arranged with the same center they describe a closed circumferential path. It should be noted that in alternative embodiments, the first and the second radius of curvature R1, R2 can be different. Furthermore, in alternative embodiments, the radius of curvature of the guide portions 61 and the engaging portions 51 may not be constant in their extension along the circumferential direction C-C. By doing so, the guide portions 61 and the engaging portions 51 can be arranged to describe a closed path, for example, in the shape of an oval or the like.

Preferably, the guide 6, and therefore each portion 61 thereof, is fixed and the workpiece-supporting unit 3 is configured to rotate with respect thereto around the main rotation axis R-R. In detail, the workpiece-supporting unit 3 rotating about the main rotation axis R-R slides the first engaging members on the guide 6 to position the gripping members 4 sequentially at the machining stations 2.

In the following description we will focus on the conformation of the first and the second engaging members to better explain their couplings.

With reference to figures 7a, 7b, 8a, 8b, 10a and 10b, preferably, each first and second engaging member 41, 51 comprises pre-engaging means 7a, 7b and locking means 8a, 8b.

The pre-engaging means 7a, 7b of the first and the second engaging members 41, 51 are mutually engageable to form a coupling with clearance. In detail, the pre-engaging means 7a of each first engaging member 41 are couplable in rotation with clearance with the respective pre-engaging means 7b of the second engaging members. It should be specified that in the aforementioned pre-engaging configuration, the pre-engaging means 7a, 7b of the first and the second engaging members 41, 51 are mutually engaged.

Preferably, the pre-engaging means 7a, 7b of the first and the second engaging members 41, 51 are embodied in a female element and a male element which are mutually insertable into each other with clearance. It should be specified that the male and female element can be made independently of the first or the second engaging members 41, 51. In the embodiment shown in figures 7a, 7b, 8a, 8b, 10a and 10b the first engaging members 41 are shaped to make the female element, while the second engaging members 51 make the male element.

The locking means 8a, 8b of the first and the second engaging members 41, 51 are mutually engageable to form a coupling without clearance. In detail, the pre-engaging means 7a of each first engaging member 41 are couplable in rotation without clearance with the respective pre-engaging means 7b of the second engaging members. It should be specified that in the aforementioned locking configuration, the pre-engaging means 7a, 7b of the first and the second engaging members 41, 51 are mutually engaged. It should be specified that in the context of the present invention, coupling without clearance means that the first and the second engaging members 41, 51 are firmly rotatably constrainable so that they cannot make relative rotations.

Preferably, the locking means 8a, 8b of the first and the second engaging members 41, 51 are embodied in a female element and a male element mutually insertable into each other without play. The foregoing regarding the male and female element of the pre-engaging means applies mutatis mutandis also to the male and female element of the locking means, taking into account, however, that the latter must form a coupling without clearance.

With reference to figure 8a, when the second engaging member 51 is in the pre-engaging configuration, the pre-engaging means 7a, 7b of the first and second engaging members 41, 51 are mutually engaged, while the locking means 8a, 8b are disengaged. Therefore, in the pre-engaging configuration the first and the second engaging members are kinematically connected in rotation about the axis P'-P', but can make small relative angular rotations.

With reference to figure 8b, when the second engaging member 51 is in the locking configuration, at least the locking means 8a, 8b of the first and the second engaging members 41, 51 are mutually engaged. Therefore, in the locking configuration the first and the second engaging members are firmly constrained in rotation about the rotation axis P'-P'.

Preferably, the pre-engaging means 7a, 7b are arranged in a central portion of the first and the second engaging members 41, 51 and the locking means 8a, 8b are arranged laterally with respect to the pre-engaging means 7a, 7b. Even more preferably, the locking means 8a, 8b are arranged laterally by both parts of the pre-engaging means 7a, 7b.

With reference to figures 7a and 10a, the pre-engaging means 7a of each first engaging member 41 preferably comprise two sliding surfaces 43 separated by an interspace 42. In detail, the sliding surfaces 43 extend along a first main direction of extension D1-D1 and are spaced apart from the interspace 42 along a direction transverse to the first main direction of extension D1-D1.

The sliding surfaces 43 are configured to slide on the guide 6 upon rotation of the workpiece-supporting unit about the main axis R-R. Therefore, the guide 6, in particular the guide portions 61, is insertable into the interspace 42 and the sliding surfaces 43 guide the movement of the first engaging members along the circumferential direction C-C. Preferably, the sliding surfaces 43 are curved and have a radius of curvature equal to the first radius of curvature R1 of the guide 6.

With reference to figures 7b and 10b, the pre-engaging means 7b of each second engaging member 51 comprise a pre-engaging wall 53 arranged in a relative gap 60 of the guide 6. In detail, the pre-engaging wall 53 extends along a second main direction of extension D2-D2, and can be inserted with clearance in the interspace 42 between the pair of sliding surfaces 43. Therefore, the pre-engaging wall 53 is configured to abuttingly receive the sliding surfaces 43 on opposite sides. The pre-engaging wall 53 is configured to be rotated about the rotation axis P'-P' of the second engaging member 51. It should be noted that the rotation axis P'-P' of the second engaging member 51 passes through the central portion.

Preferably, the pre-engaging wall 53 comprises the above-described engaging member 51.

In a first embodiment shown in figures 7a, 7b, 8a and 8b, the locking means 8a of each first engaging member 41 comprise a pair of locking surfaces 44 extending substantially along the first main direction of extension D1-D1 of the pair of sliding surfaces 43. The locking surfaces 44 are spaced apart from the interspace 42, i.e., they are arranged on opposite sides of the interspace 42. It should be noted that each locking surface 44 is arranged laterally with respect to a sliding surface 43 associated therewith. It should be specified that laterally means that the locking surface 44 is spaced along a direction transverse to the first main direction of extension D1-D1. The locking surfaces 44 are thus spaced farther away from the interspace 42 with respect to the sliding surfaces 43.

Preferably, the locking surfaces 44 are straight. Still more preferably, the locking surfaces 44 are oriented parallel to each other.

Still in the first embodiment, the locking means 8b of each second engaging member 51 comprise a locking wall 54 extending substantially along the main direction of extension of the respective pre-engaging wall 53. In detail, the locking wall 54 is insertable without clearance in the interspace 42 between the pair of locking walls 44. Therefore, the locking wall 54 is configured to abuttingly receive the locking surfaces 44 on opposite sides.

Preferably the locking wall 54 is straight so that it can be interposed between straight locking surfaces 44.

Preferably, according to what is shown in figure 7b, the pre-engaging wall 53 and the locking wall 54 are integrally formed with each other and arranged in series along the approaching/distancing direction M-M of the second engaging members 51 to/from the first engaging members 41. It should be specified that the pre-engaging wall 53 is closer to the first engaging members 41 with respect to the locking wall 54. Furthermore, the locking wall 54 is laterally projecting from opposite sides of the engaging wall 53.

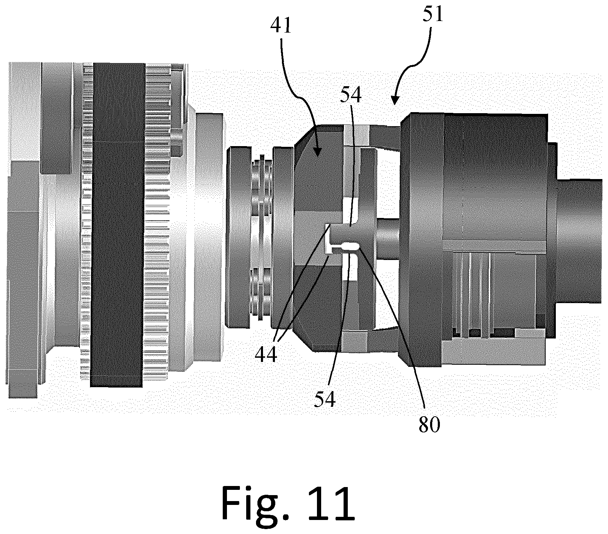

In a second embodiment shown in figures 10a, 10b and 11, the locking means 8a of each first engaging member 41 comprise a pair of locking surfaces 44 extending along a direction transverse to the first main direction of extension D1-D1 of the sliding surfaces 43. Therefore, the locking surfaces 44 extend away from the sliding surfaces 43. Preferably, the locking surfaces 44 extend from both parts of the sliding surfaces 43. Even more preferably, the locking surfaces 44 substantially define a cross with the sliding surfaces 43.

Still in the second embodiment, the locking means 8b of each second engaging member 51 comprise a locking wall 54 extending along the second main direction of extension of the respective pre-engaging wall 53. The locking wall 54 is insertable without clearance between the pair of locking surfaces 44. Preferably, in accordance with what is shown in figure 10b, the second engaging members comprise at least one tooth arranged laterally with respect to the pre-engaging wall 53 and forming the locking wall 54. Still more preferably, there are two teeth arranged on opposite sides of the pre-engaging wall 53.

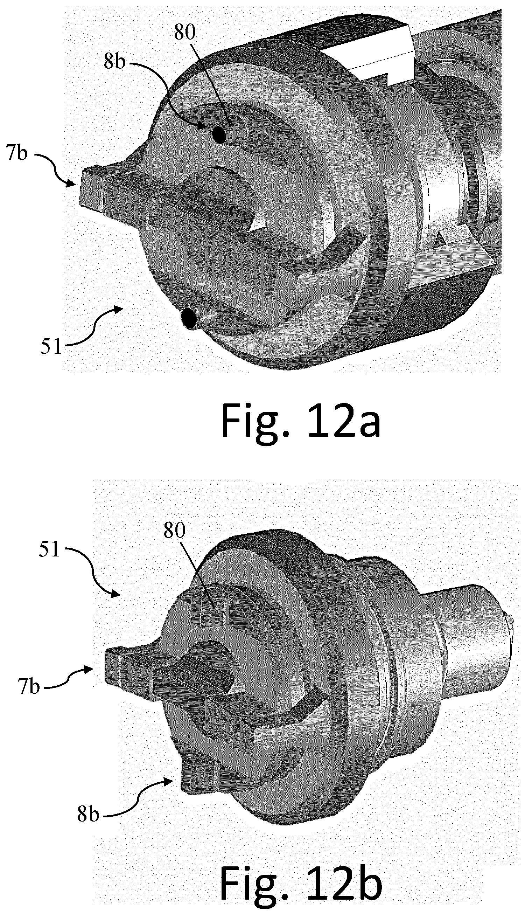

With reference to figures 11, 12a and 12b, the locking means 8a, 8b comprise centering means adapted to recover the angular clearance during the switching of the second engaging members 51 from the pre-engaging to the locking configuration.

In the embodiment of figure 11, the centering means are made by means of an elastically deformable element. Preferably, the locking wall 54 comprises the elastically deformable element. Still more preferably, the elastically deformable element is made by a notch in the locking wall 54.

In the embodiments of figures 12a and 12b, the centering means are made by conical or bevelled surfaces. Preferably, the locking wall 54 comprises a tooth having a truncoconical, conical or bevelled side wall geometry.

## Claims

1. A machine tool (1) for machining, comprising:
- a plurality of machining stations (2) configured to machine a plurality of workpieces;
- a workpiece-supporting unit (3) having a plurality of gripping regions (30) adapted to be sequentially associated to the machining stations (2);
- a plurality of gripping members (4), each gripping member (4) being placed in a respective gripping region (30) of the workpiece-support unit (3) and comprising:
- a plurality of jaws (40) adapted to be rotated about a jaw rotation axis (P-P) and configured to grip a workpiece;
- first engaging members (41) rotating and kinematically rotatably connected to the plurality of jaws (40);
- a plurality of actuator members (5) for actuating the rotation of the jaws (40) about respective jaws rotation axes (P-P) by acting on the first engaging members (41), each actuator member (5) comprising second engaging members (51), rotatable and movable from\toward their respective first engaging members (41) of the gripping members (4) to act on said first engaging members (41);
**characterised in that:**
- the machine tool comprises a guide (6) for the first engaging members (41), extending between the machining stations (2), the first engaging members (41) being configured to slide on the guide (6) upon actuation of the workpiece-supporting unit (3), the guide (6) having a plurality of gaps (60) adapted to be positioned at the gripping regions (30);
- each second engaging member (51) is at least partially arranged in a respective gap (60) of the guide (6), the second engaging member (51) being engaged with its respective first engaging member (41) when the gripping regions (30) are associated with the machining stations (2).

2. A machine tool (1) as claimed in claim 1, wherein:
- the workpiece-supporting unit (3) is configured to rotate about a main rotation axis (R-R);
- the gripping regions (30) are spaced apart from the main rotation axis (R-R);
- the guide (6) extends about the main rotation axis (R-R) between the machining stations (2).

3. A machine tool (1) as claimed in claim 2, wherein:
- the gripping regions (30) of the workpiece-supporting unit (3) are spaced apart along a circumferential direction (C-C) about the main rotation axis (R-R);
- the guide (6) comprises a plurality of guide portions (61) extending along the circumferential direction (C-C) between adjacent machining stations (2).

4. A machine tool (1) as claimed in claim 3, wherein:
- the guide portions (61) successively extend along the circumferential direction (C-C);
- each guide portion (61) has a pair of ends (62), the gaps (60) being delimited along the circumferential direction (C-C) by ends (62) of adjacent guide portions (61).

5. A machine tool (1) as claimed in claim 3 or 4, wherein each second engaging member (51) is configured to continuously connect two guide portions (61) along the circumferential direction (C-C).

6. A machine tool (1) as claimed in claim 5, wherein each second engaging member (51) comprises a engaging portion (52) projecting into a respective gap (60), said engaging portion (52) being configured to continuously connect two guide portions (61) along the circumferential direction (C-C) and being coupled in rotation to a respective first engaging member (41) by a clearance fit.

7. A machine tool (1) as claimed in claim 6, wherein:
- each guide portion (61) extends along the circumferential direction (C-C) with a first radius of curvature (R1);
- the engaging portion (52) of each first engaging member (51) has a second radius of curvature (R2), the first radius of curvature (R1) being equal to the second radius of curvature (R2).

8. A machine tool (1) as claimed in any of the preceding claims, wherein the first and second engaging members (41, 51) comprise:
- pre-engaging means (7a, 7b) that can be mutually engaged to form a rotating clearance fit between the first engaging members (41) and the second engaging members (51);
- locking means (8a, 8b) which can be mutually engaged to form a rotating clearance-free fitting between the first engaging members (41) and the second engaging members.

9. A machine tool (1) as claimed in the preceding claim, wherein each second engaging member (51) is adapted to move from/toward a respective first engaging member (41) to switch between a pre-engaging configuration in which the pre-engaging means (7a, 7b) are engaged and the locking means (8a, 8b) are disengaged, and a locked configuration in which the locking means (8a, 8b) are engaged.

10. A machine tool (1) as claimed in claim 8 or 9, wherein:
- the pre-engaging means (7a, 7b) are arranged in a central portion of the first and second engaging members (41, 51);
- the locking means (8a, 8b) are laterally arranged relative to their pre-engaging means (7a, 7b) of the first and second engaging members (41, 51).

11. A machine tool (1) as claimed in any of claims 8 to 10, wherein:
- the pre-engaging means (7a) of each first engaging member (41) comprise two sliding surfaces (43) separated by a interspace (42) and configured to slide on the guide (6) upon actuation of the workpiece-supporting unit (2), said sliding surfaces (43) extending along a first main direction of extension (D1-D1);
- the pre-engaging means (7b) of each second engaging member (51) comprise a pre-engaging wall (53) arranged in a respective gap (60) of the guide (6) and adapted to fit into the interspace (42) between the pair of sliding surfaces (43) with clearance, said pre-engaging wall (53) extending along a second main direction of extension (D2-D2).

12. A machine tool (1) as claimed in any of claims 8-11 wherein:
- the locking means (8a) of each first engaging members (41) comprise a pair of locking surfaces (44) spaced apart by the interspace (42) and extending along the first main direction of extension (D1-D1) of the pair of sliding surfaces (43);
- the locking means (8b) of each second engaging member (51) comprise a locking wall (54) extending along the second main direction of extension of the respective pre-engaging wall (53), said locking wall (54) being designed to fit without clearance between the pair of locking walls (44).

13. A machine tool (1) as claimed in claim 11, wherein:
- the locking means (8a) of each of the first engaging members (41) comprise a pair of locking surfaces (44) extending in a direction transverse to the first main direction of extension (D1-D1) of the pair of sliding surfaces (43);
- the locking means (8b) of each second engaging member (51) comprise a locking wall (54) extending along the second main direction of extension (D2-D2) of the respective pre-engaging wall (53), said locking wall (54) being designed to fit without clearance between the pair of locking surfaces (44).

14. A machine tool (1) as claimed in any of claims 9 to 13, wherein the locking means (8a, 8b) comprise centering means (80) which are adapted to recover the angular clearance as the second engaging members (51) switch from the pre-engaging configuration to the locking configuration.

## Patentansprüche

1. Werkzeugmaschine (1) zum maschinellen Bearbeiten, umfassend:
- eine Vielzahl von Bearbeitungsstationen (2), die dazu konfiguriert sind, eine Vielzahl von Werkstücken zu bearbeiten;
- eine Werkstückstützeinheit (3) mit einer Vielzahl von Greifbereichen (30), die dazu angepasst sind, sequentiell den Bearbeitungsstationen (2) zugeordnet zu werden;
eine Vielzahl von Greifelementen (4), wobei jedes Greifelement (4) in einem jeweiligen Greifbereich (30) der Werkstückstützeinheit (3) platziert ist und Folgendes umfasst:
eine Vielzahl von Backen (40), die angepasst sind, um eine Backendrehachse (P-P) gedreht zu werden, und dazu konfiguriert sind, ein Werkstück zu greifen;
- erste Eingriffselemente (41), die sich drehen und kinematisch drehbar mit der Vielzahl von Backen (40) verbunden sind;
- eine Vielzahl von Stellantrieben (5) zum Auslösen der Drehung der Backen (40) um jeweilige Backendrehachsen (P-P) durch Einwirken auf die ersten Eingriffselemente (41), wobei jeder Stellantrieb (5) zweite Eingriffselemente (51) umfasst, die drehbar und beweglich von/zu ihren jeweiligen ersten Eingriffselementen (41) der Greifelemente (4) sind, um auf die ersten Eingriffselemente (41) einzuwirken;
**dadurch gekennzeichnet, dass:**
- die Werkzeugmaschine eine Führung (6) für die ersten Eingriffselemente (41) umfasst, die sich zwischen den Bearbeitungsstationen (2) erstreckt, wobei die ersten Eingriffselemente (41) dazu konfiguriert sind, bei Betätigung der Werkstückstützeinheit (3) auf der Führung (6) zu gleiten, wobei die Führung (6) eine Vielzahl von Spalten (60) aufweist, die angepasst sind, um an den Greifbereichen (30) positioniert zu werden;
- jedes zweite Eingriffselement (51) zumindest teilweise in einem jeweiligen Spalt (60) der Führung (6) angeordnet ist, wobei das zweite Eingriffselement (51) mit seinem jeweiligen ersten Eingriffselement (41) in Eingriff steht, wenn die Greifbereiche (30) den Bearbeitungsstationen (2) zugeordnet sind.

2. Werkzeugmaschine (1) nach Anspruch 1, wobei:
- die Werkstückstützeinheit (3) dazu konfiguriert ist, sich um eine Hauptdrehachse (R-R) zu drehen;
- die Greifbereiche (30) von der Hauptdrehachse (R-R) beabstandet sind;
- die Führung (6) sich um die Hauptdrehachse (R-R) zwischen den Bearbeitungsstationen (2) erstreckt.

3. Werkzeugmaschine (1) nach Anspruch 2, wobei:
- die Greifbereiche (30) der Werkstückstützeinheit (3) entlang einer Umfangsrichtung (C-C) um die Hauptdrehachse (R-R) voneinander beabstandet sind;
- die Führung (6) eine Vielzahl von Führungsabschnitten (61) umfasst, die sich entlang der Umfangsrichtung (C-C) zwischen benachbarten Bearbeitungsstationen (2) erstrecken.

4. Werkzeugmaschine (1) nach Anspruch 3, wobei:
- die Führungsabschnitte (61) sich nacheinander entlang der Umfangsrichtung (C-C) erstrecken;
- jeder Führungsabschnitt (61) ein Paar Enden (62) aufweist, wobei die Spalte (60) entlang der Umfangsrichtung (C-C) durch Enden (62) benachbarter Führungsabschnitte (61) begrenzt sind.

5. Werkzeugmaschine (1) nach Anspruch 3 oder 4, wobei jedes zweite Eingriffselement (51) dazu konfiguriert ist, zwei Führungsabschnitte (61) entlang der Umfangsrichtung (C-C) kontinuierlich zu verbinden.

6. Werkzeugmaschine (1) nach Anspruch 5, wobei jedes zweite Eingriffselement (51) einen Eingriffsabschnitt (52) umfasst, der in einen jeweiligen Spalt (60) hineinragt, wobei der Eingriffsabschnitt (52) dazu konfiguriert ist, zwei Führungsabschnitte (61) entlang der Umfangsrichtung (C-C) kontinuierlich zu verbinden, und in Drehung an ein jeweiliges erstes Eingriffselement (41) durch eine Spielpassung gekoppelt ist.

7. Werkzeugmaschine (1) nach Anspruch 6, wobei:
- jeder Führungsabschnitt (61) sich entlang der Umfangsrichtung (C-C) mit einem ersten Krümmungsradius (R1) erstreckt;
- der Eingriffsabschnitt (52) jedes ersten Eingriffselements (51) einen zweiten Krümmungsradius (R2) aufweist, wobei der erste Krümmungsradius (R1) gleich dem zweiten Krümmungsradius (R2) ist.

8. Werkzeugmaschine (1) nach einem der vorstehenden Ansprüche, wobei die ersten und zweiten Eingriffselemente (41, 51) Folgendes umfassen:
- Voreingriffsmittel (7a, 7b), die gegenseitig in Eingriff gebracht werden können, um eine drehende Spielpassung zwischen den ersten Eingriffselementen (41) und den zweiten Eingriffselementen (51) zu bilden;
- Verriegelungsmittel (8a, 8b), die gegenseitig in Eingriff gebracht werden können, um eine drehende spielfreie Passung zwischen den ersten Eingriffselementen (41) und den zweiten Eingriffselementen zu bilden.

9. Werkzeugmaschine (1) nach dem vorstehenden Anspruch, wobei jedes zweite Eingriffselement (51) angepasst ist, sich von/zu einem jeweiligen ersten Eingriffselement (41) zu bewegen, um zwischen einer Voreingriffskonfiguration, in der die Voreingriffsmittel (7a, 7b) in Eingriff stehen und die Verriegelungsmittel (8a, 8b) nicht in Eingriff stehen, und einer Verriegelungskonfiguration, in der die Verriegelungsmittel (8a, 8b) in Eingriff stehen, zu wechseln.

10. Werkzeugmaschine (1) nach Anspruch 8 oder 9, wobei:
- die Voreingriffsmittel (7a, 7b) in einem zentralen Abschnitt des ersten und zweiten Eingriffselements (41, 51) angeordnet sind;
- die Verriegelungsmittel (8a, 8b) seitlich in Bezug auf ihre Voreingriffsmittel (7a, 7b) der ersten und zweiten Eingriffselemente (41, 51) angeordnet sind.

11. Werkzeugmaschine (1) nach einem der Ansprüche 8 bis 10, wobei:
- die Voreingriffsmittel (7a) jedes ersten Eingriffselements (41) zwei Gleitflächen (43) umfassen, die durch einen Zwischenraum (42) getrennt und dazu konfiguriert sind, bei Betätigung der Werkstückstützeinheit (2) auf der Führung (6) zu gleiten, wobei sich die Gleitflächen (43) entlang einer ersten Haupterstreckungsrichtung (D1-D1) erstrecken;
- die Voreingriffsmittel (7b) jedes zweiten Eingriffselements (51) eine Voreingriffswand (53) umfassen, die in einem jeweiligen Spalt (60) der Führung (6) angeordnet und angepasst ist, um in den Zwischenraum (42) zwischen dem Paar Gleitflächen (43) mit Spiel zu passen, wobei sich die Voreingriffswand (53) entlang einer zweiten Haupterstreckungsrichtung (D2-D2) erstreckt.

12. Werkzeugmaschine (1) nach einem der Ansprüche 8 bis 11, wobei:
- die Verriegelungsmittel (8a) jedes ersten Eingriffselements (41) ein Paar Verriegelungsflächen (44) umfassen, die durch den Zwischenraum (42) voneinander beabstandet sind und sich entlang der ersten Haupterstreckungsrichtung (D1-D1) des Paars Gleitflächen (43) erstrecken;
- die Verriegelungsmittel (8b) jedes zweiten Eingriffselements (51) eine Verriegelungswand (54) umfassen, die sich entlang der zweiten Haupterstreckungsrichtung der jeweiligen Voreingriffswand (53) erstreckt, wobei die Verriegelungswand (54) ausgelegt ist, um ohne Spiel zwischen das Paar Verriegelungswände (44) zu passen.

13. Werkzeugmaschine (1) nach Anspruch 11, wobei:
- die Verriegelungsmittel (8a) jedes der ersten Eingriffselemente (41) ein Paar Verriegelungsflächen (44) umfassen, die sich in einer Richtung quer zu der ersten Haupterstreckungsrichtung (D1-D1) des Paars Gleitflächen (43) erstrecken;
- die Verriegelungsmittel (8b) jedes zweiten Eingriffselements (51) eine Verriegelungswand (54) umfassen, die sich entlang der zweiten Haupterstreckungsrichtung (D2-D2) der jeweiligen Voreingriffswand (53) erstreckt, wobei die Verriegelungswand (54) ausgelegt ist, ohne Spiel zwischen dem Paar von Verriegelungsflächen (44) zu passen.

14. Werkzeugmaschine (1) nach einem der Ansprüche 9 bis 13, wobei die Verriegelungsmittel (8a, 8b) Zentriermittel (80) umfassen, die angepasst sind, um das Winkelspiel wiederherzustellen, wenn die zweiten Eingriffselemente (51) von der Voreingriffskonfiguration in die Verriegelungskonfiguration wechseln.

## Revendications

1. Machine-outil (1) pour l'usinage, comprenant :
- une pluralité de postes d'usinage (2) configurés pour usiner une pluralité de pièces ;
- une unité support de pièce (3) présentant une pluralité de régions de préhension (30) conçues pour être associées séquentiellement aux postes d'usinage (2) ;
- une pluralité d'éléments de préhension (4), chaque élément de préhension (4) étant placé dans une région de préhension respective (30) de l'unité support de pièce (3) et comprenant :
- une pluralité de mâchoires (40) conçues pour être tournées autour d'un axe de rotation de mâchoire (P-P) et configurées pour saisir une pièce ;
- des premiers éléments de mise en prise (41) rotatifs et reliés de manière cinématique et rotative à la pluralité de mâchoires (40) ;
- une pluralité d'éléments actionneurs (5) pour actionner la rotation des mâchoires (40) autour d'axes de rotation de mâchoires respectifs (P-P) en agissant sur les premiers éléments de mise en prise (41), chaque élément actionneur (5) comprenant des seconds éléments de mise en prise (51), rotatifs et mobiles depuis/vers leurs premiers éléments de mise en prise respectifs (41) des éléments de préhension (4) pour agir sur lesdits premiers éléments de mise en prise (41) ;
**caractérisée en ce que :**
- la machine-outil comprend un guide (6) pour les premiers éléments de mise en prise (41), s'étendant entre les postes d'usinage (2), les premiers éléments de mise en prise (41) étant configurés pour coulisser sur le guide (6) lors de l'actionnement de l'unité support de pièce (3), le guide (6) présentant une pluralité d'interstices (60) conçus pour être positionnés au niveau des régions de préhension (30) ;
- chaque second élément de mise en prise (51) est au moins partiellement agencé dans un interstice respectif (60) du guide (6), le second élément de mise en prise (51) étant en prise avec son premier élément de mise en prise respectif (41) lorsque les régions de préhension (30) sont associées aux postes d'usinage (2).

2. Machine-outil (1) selon la revendication 1, dans laquelle :
- l'unité support de pièce (3) est configurée pour tourner autour d'un axe de rotation principal (R-R) ;
- les régions de préhension (30) sont espacées de l'axe de rotation principal (R-R) ;
- le guide (6) s'étend autour de l'axe de rotation principal (R-R) entre les postes d'usinage (2).

3. Machine-outil (1) selon la revendication 2, dans laquelle :
- les régions de préhension (30) de l'unité support de pièce (3) sont espacées le long d'une direction circonférentielle (C-C) autour de l'axe de rotation principal (R-R) ;
- le guide (6) comprend une pluralité de parties de guidage (61) s'étendant le long de la direction circonférentielle (C-C) entre des postes d'usinage adjacents (2).

4. Machine-outil (1) selon la revendication 3, dans laquelle :
- les parties de guidage (61) s'étendent successivement le long de la direction circonférentielle (C-C) ;
- chaque partie de guidage (61) présente une paire d'extrémités (62), les interstices (60) étant délimités le long de la direction circonférentielle (C-C) par des extrémités (62) de parties de guidage adjacentes (61).

5. Machine-outil (1) selon la revendication 3 ou 4, dans laquelle chaque second élément de mise en prise (51) est configuré pour relier en continu deux parties de guidage (61) le long de la direction circonférentielle (C-C).

6. Machine-outil (1) selon la revendication 5, dans laquelle chaque second élément de mise en prise (51) comprend une partie de mise en prise (52) faisant saillie dans un interstice respectif (60), ladite partie de mise en prise (52) étant configurée pour relier en continu deux parties de guidage (61) le long de la direction circonférentielle (C-C) et étant couplée en rotation à un premier élément de mise en prise respectif (41) par un ajustement avec jeu.

7. Machine-outil (1) selon la revendication 6, dans laquelle :
- chaque partie de guidage (61) s'étend le long de la direction circonférentielle (C-C) avec un premier rayon de courbure (R1) ;
- la partie de mise en prise (52) de chaque premier élément de mise en prise (51) présente un second rayon de courbure (R2), le premier rayon de courbure (R1) étant égal au second rayon de courbure (R2).

8. Machine-outil (1) selon l'une quelconque des revendications précédentes, dans laquelle les premiers et seconds éléments de mise en prise (41, 51) comprennent :
- des moyens de pré-mise en prise (7a, 7b) qui peuvent venir en prise l'un avec l'autre pour former un ajustement avec jeu rotatif entre les premiers éléments de mise en prise (41) et les seconds éléments de mise en prise (51) ;
- des moyens de verrouillage (8a, 8b) qui peuvent venir en prise l'un avec l'autre pour former un raccord rotatif sans jeu entre les premiers éléments de mise en prise (41) et les seconds éléments de mise en prise.

9. Machine-outil (1) selon la revendication précédente, dans laquelle chaque second élément de mise en prise (51) est apte à se s'éloigner/s'approcher d'un premier élément de mise en prise respectif (41) pour commuter entre une configuration de pré-mise en prise dans laquelle les moyens de pré-mise en prise (7a, 7b) sont en prise et les moyens de verrouillage (8a, 8b) sont désolidarisés, et une configuration verrouillée dans laquelle les moyens de verrouillage (8a, 8b) sont en prise.

10. Machine-outil (1) selon la revendication 8 ou 9, dans laquelle :
- les moyens de pré-mise en prise (7a, 7b) sont agencés dans une partie centrale des premiers et seconds éléments de mise en prise (41, 51) ;
- les moyens de verrouillage (8a, 8b) sont agencés latéralement par rapport à leurs moyens de pré-mise en prise (7a, 7b) des premiers et seconds éléments de mise en prise (41, 51).

11. Machine-outil (1) selon l'une quelconque des revendications 8 à 10, dans laquelle :
- les moyens de pré-mise en prise (7a) de chaque premier élément de mise en prise (41) comprennent deux surfaces de glissement (43) séparées par un espace intermédiaire (42) et configurées pour coulisser sur le guide (6) lors de l'actionnement de l'unité support de pièce (2), lesdites surfaces de glissement (43) s'étendant le long d'une première direction principale d'extension (D1-D1) ;
- les moyens de pré-mise en prise (7b) de chaque second élément de mise en prise (51) comprennent une paroi de pré-mise en prise (53) agencée dans un interstice respectif (60) du guide (6) et conçue pour s'insérer dans l'espace intermédiaire (42) entre la paire de surfaces de glissement (43) avec un jeu, ladite paroi de pré-mise en prise (53) s'étendant le long d'une seconde direction principale d'extension (D2-D2).

12. Machine-outil (1) selon l'une quelconque des revendications 8-11, dans laquelle :
- les moyens de verrouillage (8a) de chaque premier élément de mise en prise (41) comprennent une paire de surfaces de verrouillage (44) espacées par l'espace intermédiaire (42) et s'étendant le long de la première direction principale d'extension (D1-D1) de la paire de surfaces de glissement (43) ;
- les moyens de verrouillage (8b) de chaque second élément de mise en prise (51) comprennent une paroi de verrouillage (54) s'étendant le long de la seconde direction principale d'extension de la paroi de pré-mise en prise respective (53), ladite paroi de verrouillage (54) étant conçue pour se loger sans jeu entre la paire de parois de verrouillage (44).

13. Machine-outil (1) selon la revendication 11, dans laquelle :
- les moyens de verrouillage (8a) de chacun des premiers éléments de mise en prise (41) comprennent une paire de surfaces de verrouillage (44) s'étendant dans une direction transversale à la première direction principale d'extension (D1-D1) de la paire de surfaces de glissement (43) ;
- les moyens de verrouillage (8b) de chaque second élément de mise en prise (51) comprennent une paroi de verrouillage (54) s'étendant le long de la seconde direction principale d'extension (D2-D2) de la paroi de pré-mise en prise respective (53), ladite paroi de verrouillage (54) étant conçue pour se loger sans jeu entre la paire de surfaces de verrouillage (44).

14. Machine-outil (1) selon l'une quelconque des revendications 9 à 13, dans laquelle les moyens de verrouillage (8a, 8b) comprennent des moyens de centrage (80) qui sont conçus pour rattraper le jeu angulaire lorsque les seconds éléments de mise en prise (51) passent de la configuration de pré-mise en prise à la configuration de verrouillage.
